Europäisches Patentamt

European Patent Office

Office européen des brevets

(19)

(11)  **EP 1 032 107 A1**

(12)  **EUROPÄISCHE PATENTANMELDUNG**

(43) Veröffentlichungstag:
    **30.08.2000  Patentblatt 2000/35**

(51) Int Cl.[7]: **H02J 3/14**

(21) Anmeldenummer: **99103737.5**

(22) Anmeldetag: **26.02.1999**

(84) Benannte Vertragsstaaten:
    **AT BE CH CY DE DK ES FI FR GB GR IE IT LI LU MC NL PT SE**
    Benannte Erstreckungsstaaten:
    **AL LT LV MK RO SI**

(71) Anmelder: **Siemens Building Technologies AG**
    **6300 Zug (CH)**

(72) Erfinder: **Kraus, Norbert**
    **6208 Oberkirch (CH)**

(54)  **Einrichtung zur Begrenzung der Leistungsaufnahme in einem Verbrauchernetz**

(57)    Eine Einrichtung zur Begrenzung der durch Energieverbraucher eines gewissen Verbrauchernetzes aufgenommenen Leistung weist Mittel auf, durch welche die Leistungsdifferenz $\Delta P$, welche aus- oder einzuschalten ist, bestimmbar ist. Die Einrichtung weist eine Regeleinrichtung auf, deren Führungsgrösse durch die für das Verbrauchernetz erlaubten Energiekosten bestimmt ist, wobei durch die Regeleinrichtung eine der Leistungsdifferenz $\Delta P$ entsprechende Stellgrösse generierbar ist. Die Einrichtung eignet sich insbesondere zur Minimierung der durch Leistungsspitzen verursachten Kosten.

**Fig.2**

11 → 27 → $\epsilon_{abs}(t)$ → 20 → 12 → $\Delta P$

14

7

21

23 — K max — K ($\epsilon_{abs}(t)\,\tau$)

24 — Neu eingereicht

22 — $\epsilon$ max

**Beschreibung**

Die Erfindung bezieht sich auf eine Einrichtung gemäss dem Oberbegriff des Anspruchs 1.

Solche Einrichtungen werden beispielsweise in Gebäudeautomatisationsanlagen - die auch als Gebäudeleitsysteme bezeichnet werden - eingesetzt, durch welche eine Vielzahl von Energieverbrauchem eines Gebäudes steuerbar sind.

Für grosse Energiebezüger, sei es von elektrischer oder fossiler Energie, verlangen viele Energieproduzenten neben dem Arbeitspreis einen Leistungspreis. Dieser wird beispielsweise bestimmt, indem in mehreren, mit dem Energiebezüger vereinbarten Messperioden die mittlere Leistung gemessen wird und diejenige Messperiode mit der höchsten mittleren Leistung verrechnet wird.

Es werden aber auch Sonderverträge abgeschlossen, nach denen häufig nicht direkt die höchste gemessene mittlere Leistung aus mehreren Messperioden berücksichtigt, sondern die mittlere Leistung in den Messperioden erst über einen zeitabhängigen Tarif in Preise umgerechnet, und dann diejenige Messperiode preisbestimmend eingesetzt wird, welche den höchsten Preis erzielt.

Es ist eine Einrichtung gemäss dem Oberbegriff des Anspruchs 1 bekannt (EP 0 648 005 A1), bei der die Leistungsaufnahme eines Verbrauchernetzes auf einen vorbestimmten Grenzwert begrenzbar ist, indem wenigstens einige Verbraucher des erwähnten Verbrauchernetzes nach einem vonvählbaren Koordinationsprogramm ab- oder zugeschaltet werden.

Weiter ist eine Einrichtung dieser Art bekannt (EP 0 268 697 A bzw. WO89/12342), welche eine Empfängceinrichtung für Leistungskostensignale von einem Anbieter aufweist. Über eine Eingabeeinheit wird der Preis pro Energieeinheit manuell eingegeben, der beim Betreiben eines gewissen Gerätes nicht überschritten werden darf. Das Gerät wird dann durch die Einrichtung abgeschaltet bzw. nicht eingeschaltet, wenn die Energiekosten grösser als der eingegebene Wert sind.

Es ist auch eine Einrichtung bekannt (DE 42 29 277 A1), welche Verbraucher abhängig von einem Steuersignal einer Stromversorgungsgesellschaft abschaltet, so dass in einem Energieversorgungssystem ein Gleichgewicht bezüglich Angebot und Nachfrage eingehalten wird.

Im weiteren ist ein Gebäudeleitsystem bekannt (WO 96/21264), welches Module zur Überwachung und Steuerung der in einem Gebäude bezogenen Energie aufweist.

Schliesslich ist auch ein Verfahren bekannt (US 5 414 640), mit dem ein voraussichtlicher Energieverbrauch für ein zukünftiges Zeitintervall abschätzbar ist. Mit Hilfe des geschätzten Energieverbrauchs werden Signale zum Ein- bzw. Ausschalten von Lasten generiert. Durch das Verfahren sind Energiespitzen vermeidbar, wobei die Anzahl kurzfristig vorgenommener Aus-Ein-Schaltvorgänge an einem Verbraucher reduzierbar sind.

Bei den bekannte Systemen zur Lastbegrenzung wird der Energieverbrauch von Lasten laufend gemessen und es werden einzelne Lasten dann gezielt abgeworfen oder reduziert, wenn ein Überschreiten einer einstellbaren Leistungsgrenze droht.

Grundsätzlich können bekannte Systeme als spezialisierte Regler betrachtet werden, deren Führungsgrösse ein maximale Leistung ist, die über eine ganze Messperiode bezogen werden darf.

Die bekannten Systeme unterscheiden sich im wesentlichen durch die Art der Extrapolation von Messdaten innerhalb einer Messperiode und ferner durch die Art des Auswahlverfahrens für Lasten, welche einzuschalten bzw. abzuwerfen sind.

Der Erfindung liegt die Aufgabe zugrunde, eine Einrichtung zur Begrenzung der Leistungsaufnahme zu schaffen, welche für einen Energiebezüger insbesondere dann aussagekräftig ist, wenn die Kosten, die durch Leistungsspitzen verursacht werden, zu minimieren sind.

Die genannte Aufgabe wird erfindungsgemäss durch die Merkmale des Anspruchs 1 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:

Fig. 1      eine Gebäudeinstallation mit einem Gebäudeleitsystem und einer Einrichtung zur Begrenzung von Lastspitzen, und

Fig. 2      den prinzipiellen Aufbau der Einrichtung zur Begrenzung von Lastspitzen.

In der für die Zeichnung gewählten, aus der Literatur bekannten Darstellungsart für Datenflussdiagramme (dazu beispielsweise D. J. Hatley, I. A. Pirbhai: Strategies for Real-Time System Specification, Dorset House, NY 1988) bedeutet ein Kreis eine Aktivität, ein Viereck ein angrenzendes System und ein Pfeil einen Kanal zur Übertragung von Daten und/oder Ereignissen, wobei die Pfeilspitze in die wesentliche Datenflussrichtung zeigt. Ein Datenspeicher, der allgemein mehreren Aktivitäten zur Verfügung steht, ist durch zwei gleich lange, parallele Linien dargestellt. Mit dem Begriff Datenspeicher wird hier eine Einrichtung zur Speicherung von Daten bezeichnet, welche auch Mittel zur Verhinderung von Konflikten bei zeitlich parallelem Zugriff mehrerer Aktivitäten auf die Daten aufweist. Im weiteren ist beispielsweise eine Anordnung aus zwei durch einen Kanal verbundenen Aktivitäten mit einer einzigen Aktivität, welche alle Aufgaben der besagten beiden Aktivitäten erfüllt, äquivalent. Eine Aktivität ist allgemein in mehrere über Kanäle und/oder Datenspeicher verbundene Aktivitäten zerlegbar. Weitere in der Literatur der Datenflussdiagramme benutzte Bezeichnungen sind "Terminator" für das angrenzende System, "Process" oder "Task" für die Aktivität, "Data Flow" oder "Channel" für den Kanal und "Pool" oder "Data Pool" für den Datenspeicher.

Eine Aktivität kann als elektronische Schaltung oder auch softwaremässig als Prozess, Programmstück oder Routine verwirklicht werden, wobei die Aktivität bei einer softwaremässigen Ausführung auch die Zielhardware umfasst, auf welcher der Prozess, das Programmstück oder die Routine ablauffähig ist.

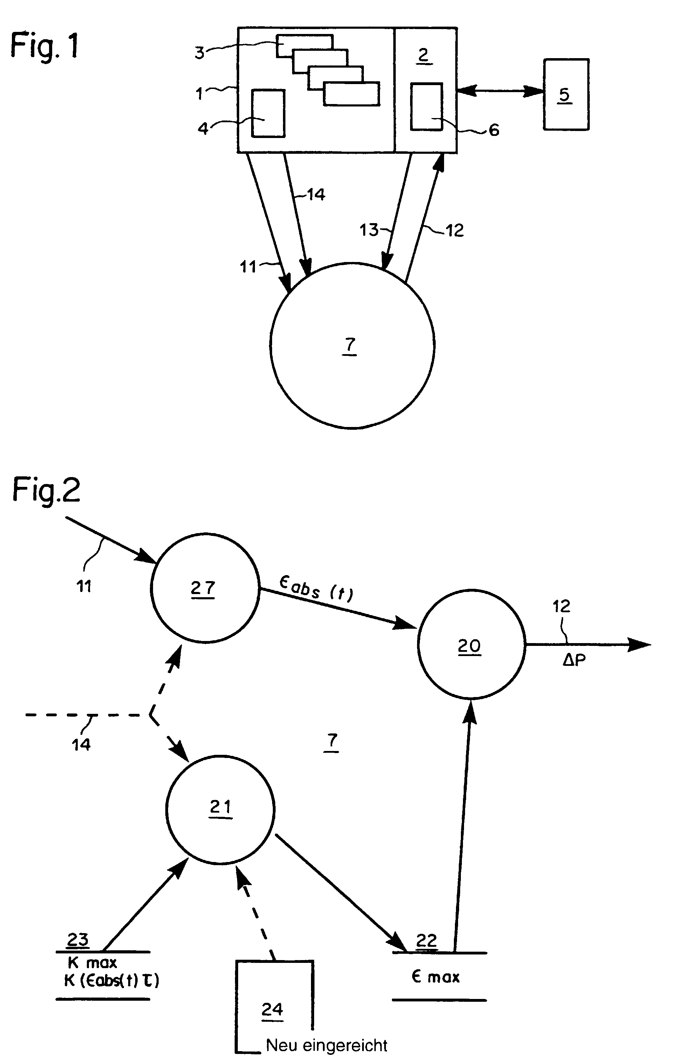

In der Fig. 1 bedeutet 1 eine Gebäudeinstallation, welche ein Gebäudeleitsystem 2, mehrere Energieverbraucher 3 und wenigstens einen Energiezähler 4 aufweist. Die in der Gebäudeinstallation 1 von den Energieverbrauchern 3 umgesetzte Energie und/oder Leistung ist vom Energiezähler 4 erfassbar. Die Energieverbraucher 3 sind durch das Gebäudeleitsystem 2 einzeln steuerbar, wobei ein Energieverbraucher 3 durch eine Auswahleinheit 6 oder auch durch ein direkt im Gebäudeleitsystem 2 implementiertes Modul nach vorgegebenen Kriterien ein - und ausschaltbar ist.

Mit Vorteil ist die Auswahleinheit 6 ein Modul des Gebäudeleitsystems 2, grundsätzlich ist die Auswahleinheit 6 jedoch auch allgemein als Einrichtung der Gebäudeinstallation 1 implementierbar.

Das Gebäudeleitsystem 2 eignet sich zur Steuerung und/oder Regelung von Prozessgrössen in komplexen technischen Systemen der Gebäudeinstallation 1, wobei die Gebäudeinstallation 1 beispielhaft Zutritts- und Feuerüberwachungssysteme, Beleuchtungs- und Transportanlagen sowie Heizungs-, Lüftungs- und Klimaanlagen umfasst und wobei durch das Gebäudeleitsystem 2 insbesondere auch Raumklimagrössen beeinflusst werden.

Für die Bedienung ist das Gebäudeleitsystem 2 ist mit einer Schnittstelleneinheit 5 verbunden. Die Schnittstelleneinheit 5 ist vorzugsweise direkt ein Mensch-Maschine-Interface, welches von einem Bediener beispielsweise durch ein graphikfähiges Bildschirmterminal mit Maus und Tastatur bedienbar ist. In einer Variante ist die Schnittstelleneinheit 5 eine Verbindung des Gebäudeleitsystems 2 zu einem übergeordneten System.

Eine Einrichtung 7 zur Begrenzung von Lastspitzen verfügt über einen ersten Eingangskanal 11 durch den ein Zählersignal vom Energiezähler 4 an die Einrichtung 7 übertragbar ist. Eine von der Einrichtung 7 zur Begrenzung von Lastspitzen generierte Stellgrösse wird über einen Ausgangskanal 12 an das Gebäudeleitsystem 2 oder auch an die Auswahleinheit 6 übertragen.

Mit Vorteil verfügt die Einrichtung 7 über einen zweiten Eingangskanal 13 mit dem Parameter vom Gebäudeleitsystem 2 oder auch von der Schnittstelleneinheit 5 an die Einrichtung 7 übertragbar sind. In einer Vorteilhaften Variante weist die Einrichtung 7 zur Begrenzung von Lastspitzen auch einen dritten Eingangskanal 14 zum Empfangen eines Synchronisationssignals auf, wobei das Synchronisationssignal beispielsweise vom Energiezähler 4 oder vom Gebäudeleitsystem 2 an die Einrichtung 7 zur Begrenzung von Lastspitzen weitergegeben wird. In einer Variante der Einrichtung 7 wird das Zählersignal mit dem Synchronisationssignal kombiniert und gemeinsam zur Einrichtung 7 übertragen.

Zur genaueren Erklärung von Aufbau und Funktionsweise der Einrichtung 7 werden folgende Definitionen und Beziehungen eingeführt:

$t$ = aktuelle Uhrzeit.

$t_e$ = erwartete Uhrzeit am Ende einer Messperiode.

$K_{max}$ = maximal erlaubter Kostenbetrag für den Energieverbrauch innerhalb einer ganzen Messperiode; $K_{max}$ ist beispielhaft tageszeitunabhängig.

$E_{max}$ = maximal erlaubter Energieverbrauch innerhalb einer ganzen Messperiode; $E_{max}$ ist in der Regel tageszeitabhängig und wird aus $K_{max}$ berechnet.

$E_t(t)$ = Energieverbrauch seit dem Start der Messperiode.

$E_{abs}(t)$ = erwarteter Energieverbrauch innerhalb der ganzen Messperiode, vorausberechnet zum Zeitpunkt t, unter der Annahme gleichbleibender momentaner Leistung.

$K(E_{abs}(t),\tau)$ = Kostenfunktion; die Kostenfünktion bestimmt wie aus $E_{abs}(t)$ oder auch $E_{max}$ die zugehörigen Kosten in Währungseinheiten bestimmt werden; die Kostenfünktion ist in der Regel von der Tageszeit $\tau$ abhängig; es gilt: $K_{max} = K(E_{max}(\tau),\tau)$.

$InvK(K, \tau)$ = Umkehrfunktion der Kostenfünktion $K(E, \tau)$; es gilt: $E_{max}(\tau) = InvK(K_{max}, \tau)$.

$\Delta P(t)$ = Leistung, die geschaltet werden muss, damit $K_{max}$ genau erreicht wird.

Die Einrichtung zur Begrenzung der durch Energieverbraucher aufgenommenen Leistung weist gemäss der vorliegenden Erfindung eine Regeleinrichtung auf, deren Führungsgrösse durch die erlaubten Kosten für den Energieverbrauch gebildet wird. Eine durch die Regeleinrichtung generierte Stcllgrösse entspricht einer Leistungsdifferenz $\Delta P$, welche ein- oder auszuschalten ist, damit die erlaubten Energiekosten eingehalten werden. Mit Vorteil werden die Energiekosten durch den abgespeicherten maximal erlaubten Kostenbetrag $K_{max}$ und die abgespeicherte Kostenfünktion $K(E_{abs}(t),\tau)$ definiert.

Wesentlich ist dabei das Verfahren, die Energiekosten direkt als Führungsgrösse zur Regelung der Energie- oder Leistungsspitzen zu verwenden. Durch den Einsatz einer derartigen Regelung ist der Vorteil erreichbar, dass die maximal erlaubbaren Energiekosten von einem Anlagenbediener oder Anlagenbetreiber über die Schnittstelleneinheit 5 des Gebäudeleitsystems 2 direkt vorwählbar und sichtbar sind. Bei der Vorgabe eines tageszeitunabhängigen Kostenbetrags $K_{max}$ ergibt sich eine tageszeitunabhängige Führungsgrösse, auch dann, wenn die Kostenfünktion $K(E_{abs}(t), \tau)$ von der Tageszeit $\tau$ abhängig ist.

Zudem umfasst die Einrichtung zur Begrenzung der durch Energieverbraucher aufgenommenen Leistung mit Vorteil Mittel zur selbsttätigen Berechnung der inversen Funktion $InvK(K, \tau)$ aus der Kostenfunktion $K(E_{abs}(t),\tau)$, wobei durch die inverse Funktion $InvK(K, \tau)$ der maximal erlaubte Energieverbrauch $E_{max}$ innerhalb einer Messperiode berechnet wird.

Die in der Regel tageszeitabhängige Kostenfünktion $K(E_{abs}(t),\tau)$ ist vom Energicanbieter definiert, wobei - über längere Zeiträume gesehen - grundsätzlich verschiedene Kostenfunktionen zur Anwendung kommen können.

Zum besseren Verständnis wird folgendes Beispiel einer Tarifberechnung mit konkreten Angaben für die Kostenfünktion $K(E_{abs}(t),\tau)$ dargestellt:

Ist $E_i$ die gemessenen mittlere Leistung in der i-ten Messperiode und ist $x(\tau)$ ein sogenanntes Billigband - d.h. der Anteil an $E_i$, der zum reduziertem Leistungspreis NT=20 CHF/kW verrechnet wird - und wird der Rest von $E_i$ zum normalen Leistungspreis HT=200 CHF/kW verrechnet, beispielsweise

$$x(\tau) = 0$$

für $\tau$ = 10 .. 12 Uhr und

$$x(\tau) = 300 \text{ kW}$$

in der Zeit ausserhalb des Zeitintervalls von 10 .. 12 Uhr so ergeben sich für die i-te Messperiode Kosten von

$$K(E_{i,} \ \tau) = x(\tau) * NT + [ \ E_i - x(\tau)] * HT$$

Die Umkehrfunktion der Kostenfünktion lautet dann:

$$InvK(K, \ \tau) = E(K, \ \tau) = [(K - x(\tau) * NT)/HT] + x(\tau)$$

Das Verhalten der Regeleinrichtung wird durch die Führungsgrösse $K_{max}$ bestimmt, wobei die Messgrösse der Regeleinrichtung die auf das Zählersignal angewandte Kostenfünktion $K(E_{abs}(t),\tau)$ ist und wobei die Stellgrösse die zu schaltende Leistungsdifferenz $\Delta P(t)$ ist.

Für die Stellgrösse gilt:

$$\Delta P(t) = \frac{E_{abs}(t) - InvK(K_{max}, \ \tau)}{t_e - t}$$

wobei $E_{abs}(t)$ die Extrapolation der bisherigen Verbrauchskurve bis zum Ende der Messperiode ist. Mit Vorteil ist die Art der Extrapolation in bekannter Art auf die Bedürfnisse abstimmbar, wie auch das Verfahren, nach welchen Kriterien aus der berechneten Leistungsdifferenz $\Delta P(t)$ die tatsächlich zu schaltenden Lasten bestimmt werden, an die aktuellen Bedürfnisse und Voraussetzungen abgestützt wird. So können beispielsweise zusätzlich Grenzwerte für Leistungsdifferenz $\Delta P(t)$ festgelegt werden, innerhalb denen keine Lasten zu- oder abgeschaltet werden, um so eine Schwingungsneigung der Regeleinrichtung zu vermeiden.

Eine vorteilhafte Ausführung der Einrichtung 7 zur Begrenzung von Lastspitzen (Fig. 2) weist ein Mittel 20 zur Generierung der Stellgrösse bzw. der Leistungsdifferenz $\Delta P(t)$, ein Mittel 21 zur Berechnung des innerhalb einer ganzen Messperiode maximal erlaubten Energieverbrauchs $E_{max}$, einen ersten Datenspeicher 22 zum Speichern des maximal erlaubten Energieverbrauchs $E_{max}$ und einen zweiten Datenspeicher 23 zum Speichern des maximal erlaubten Kostenbetrages $K_{max}$ und der Kostenfunktion $K(E_{abs}(t),\tau)$ auf.

Als Zeitbasis zur Berechnung des maximal erlaubten Energieverbrauchs $E_{max}$ dient das über den dritten Eingangskanal 14 verfügbare Synchronisationssignal und/oder eine Uhr 24, welche je nach Bedarf lokal in der Einrichtung 7 oder global in der Gebäudeinstallation 1 implementiert ist.

Mit Vorteil sind der maximal erlaubte Kostenbetrages $K_{max}$ und die Kostenfünktion $K(E_{abs}(t),\tau)$ über die Schnittstelleneinheit 5 (Fig. 1) und den zweiten Eingangskanal 13 der Einrichtung 7 einstellbar oder wählbar.

Das Mittel 20 zur Generierung der Stellgrösse bzw. der Leistungsdifferenz $\Delta P(t)$ venvendet mit Vorteil den vorausberechneten und abgespeicherten maximal erlaubten Energieverbrauch $E_{max}$ sowie den für die aktuelle Messperiode erwarteten Energieverbrauch $E_{abs}(t)$ oder die momentan bezogene Leistung, wobei der für die aktuelle Messperiode erwartete Energieverbrauch $E_{abs}(t)$ oder die momentan bezogene Leistung durch weitere Mittel 27 der Einrichtung aus dem über den ersten Eingangskanal 11 zugeführten Zählersignal ermittelt werden, wobei zur Bestimmung des erwarteten Energieverbrauchs $E_{abs}(t)$ zudem das über den dritten Eingangskanal 14 zugeführte Synchronisationssignal benutzt wird.

Bei Bedarf sind Daten und Grössen der Einrichtung 7, wie beispielsweise der erwartete Energieverbrauch $E_{abs}(t)$, die aktuelle Kostenfünktion $K(E_{abs}(t),\tau)$ und der maximal erlaubte Energieverbrauch $E_{max}$ für das Gebäudeleitsystem 2 zugreifbar, sodass beispielsweise Visualisierung, Datenarchivierung, Überwachung und Bedienung der kostengeführten Einrichtung 7 zur Begrenzung von Lastspitzen mit vorhandenen Mitteln des Gebäudeleitsystems 2 (Fig. 1) oder der Gebäudeinstallation 1 durchführbar sind.

**Patentansprüche**

1. Einrichtung zur Begrenzung der durch Energieverbraucher eines gewissen Verbrauchernetzes aufgenommenen Leistung mit Mitteln zur Bestimmung der Leistungsdifferenz $\Delta P$, welche aus- oder einzuschalten ist, gekennzeichnet
durch eine Regeleinrichtung, deren Führungsgrösse durch die für das Verbrauchernetz erlaubten Energiekosten bestimmt ist, wobei durch die Regeleinrichtung eine der Leistungsdifferenz $\Delta P$ entsprechende Stellgrösse generierbar ist.

2. Einrichtung nach Anspruch 1, dadurch gekennzeichnet, dass die Energiekosten durch einen abgespeicherten maximal erlaubten Kostenbetrag $K_{max}$ und eine abgespeicherte Kostenfünktion $K(E_{abs}(t),\tau)$ bestimmt ist.

3. Einrichtung nach Anspruch 2, dadurch gekennzeichnet, dass die Kostenfünktion zeitabhängig ist.

4. Einrichtung nach einem vorangehenden Anspruch, dadurch gekennzeichnet, dass die Führungsgrösse der Regeleinrichtung über eine Schnittstelleneinheit (5) veränderbar ist.

5. Einrichtung nach einem vorangehenden Anspruch, dadurch gekennzeichnet, dass ein Verhalten der Führungsgrösse der Regeleinrichtung aus einer gewissen Menge vordefinierter Musterverhalten auswählbar ist.

6. Einrichtung nach einem der Ansprüche 2 bis 5, gekennzeichnet durch Mittel zur selbsttätigen Berechnung einer inversen Funktion aus der Kostenfunktion, wobei durch die inverse Funktion der maximal erlaubte Energieverbrauch innerhalb einer Messperiode berechenbar ist.

7. Einrichtung nach einem vorangehenden Anspruch, gekennzeichnet durch Mittel, durch welche einzuschaltende oder auszuschaltende Verbraucher aufgrund der ermittelten Stellgrösse bestimmbar sind.

Fig. 1

3

1

4

2

5

6

14

13 12

11

7

Fig. 2

11

27

$\epsilon_{abs}(t)$

20

12

$\Delta P$

14

7

21

23
K max
K $(\epsilon_{abs}(t) \tau)$

24

Neu eingereicht

22

$\epsilon$ max

**Europäisches Patentamt**

# EUROPÄISCHER RECHERCHENBERICHT

Nummer der Anmeldung

EP 99 10 3737

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 573 140 A (HONEYWELL INC) 8. Dezember 1993 (1993-12-08) * Spalte 1, Zeile 53 - Spalte 2, Zeile 58 * --- | 1-7 | H02J3/14 |
| X | US 4 855 922 A (HUDDLESTON PAUL M ET AL) 8. August 1989 (1989-08-08) * Spalte 6, Zeile 39 - Spalte 7, Zeile 48 * --- | 1-7 | |
| D,A | US 5 572 438 A (EHLERS GREGORY A ET AL) 5. November 1996 (1996-11-05) --- | 1-7 | |
| D,A | US 5 436 511 A (NIGAWARA SEIITSU ET AL) 25. Juli 1995 (1995-07-25) --- | 1-7 | |
| D,A | US 5 543 666 A (PRIESEMUTH WOLFGANG) 6. August 1996 (1996-08-06) --- | 1-7 | |
| D,A | EP 0 268 697 A (NIEDNER PETER DR) 1. Juni 1988 (1988-06-01) --- | 1-7 | **RECHERCHIERTE SACHGEBIETE (Int.Cl.7)** |
| D,A | US 5 414 640 A (SEEM JOHN E) 9. Mai 1995 (1995-05-09) ----- | 1-7 | H02J |

Der vorliegende Recherchenbericht wurde für alle Patentansprüche erstellt

| Recherchenort | Abschlußdatum der Recherche | Prüfer |
|---|---|---|
| DEN HAAG | 19. Juli 1999 | Lampe, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

EP 1 032 107 A1

## ANHANG ZUM EUROPÄISCHEN RECHERCHENBERICHT
## ÜBER DIE EUROPÄISCHE PATENTANMELDUNG NR.

EP 99 10 3737

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-07-1999

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 0573140 | A | 08-12-1993 | US | 5278772 | A | 11-01-1994 |
| | | | AU | 3832693 | A | 11-11-1993 |
| | | | CA | 2093472 | A | 07-11-1993 |
| | | | DE | 69318889 | D | 09-07-1998 |
| | | | DE | 69318889 | T | 07-01-1999 |
| | | | JP | 7044207 | A | 14-02-1995 |
| US 4855922 | A | 08-08-1989 | KEINE | | | |
| US 5572438 | A | 05-11-1996 | AU | 699197 | B | 26-11-1998 |
| | | | AU | 4746796 | A | 24-07-1996 |
| | | | BR | 9600042 | A | 16-09-1997 |
| | | | CA | 2202129 | A | 11-07-1996 |
| | | | CN | 1183860 | A | 03-06-1998 |
| | | | EP | 0801836 | A | 22-10-1997 |
| | | | JP | 10510138 | T | 29-09-1998 |
| | | | NZ | 301932 | A | 28-01-1999 |
| | | | WO | 9621264 | A | 11-07-1996 |
| | | | US | 5684710 | A | 04-11-1997 |
| | | | US | 5696695 | A | 09-12-1997 |
| US 5436511 | A | 25-07-1995 | JP | 5083854 | A | 02-04-1993 |
| | | | DE | 4229277 | A | 01-04-1993 |
| US 5543666 | A | 06-08-1996 | DE | 4334488 | A | 13-04-1995 |
| | | | DE | 59404618 | D | 02-01-1998 |
| | | | EP | 0648005 | A | 12-04-1995 |
| | | | ZA | 9407569 | A | 29-05-1995 |
| EP 0268697 | A | 01-06-1988 | AT | 64478 | T | 15-06-1991 |
| | | | WO | 8912342 | A | 14-12-1989 |
| US 5414640 | A | 09-05-1995 | KEINE | | | |

EPO FORM P0461

Für nähere Einzelheiten zu diesem Anhang : siehe Amtsblatt des Europäischen Patentamts, Nr.12/82

8